(19) Europäisches Patentamt
European Patent Office
Office européen des brevets

(11) EP 3 196 228 B1

(12) EUROPEAN PATENT SPECIFICATION

(45) Date of publication and mention of the grant of the patent:
**26.08.2020 Bulletin 2020/35**

(21) Application number: **16844642.5**

(22) Date of filing: **05.09.2016**

(51) Int Cl.:
***C08G 73/10*** *(2006.01)* ***G02F 1/1337*** *(2006.01)*

(86) International application number:
**PCT/KR2016/009916**

(87) International publication number:
**WO 2017/043822 (16.03.2017 Gazette 2017/11)**

# (54) POLYMER FOR LIQUID CRYSTAL ALIGNMENT AGENT

POLYMER FÜR FLÜSSIGKRISTALLAUSRICHTUNGSMITTEL

POLYMÈRE POUR AGENT D'ALIGNEMENT DE CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2015 KR 20150127042**
**02.09.2016 KR 20160113223**

(43) Date of publication of application:
**26.07.2017 Bulletin 2017/30**

(73) Proprietor: **LG Chem, Ltd.**
**Seoul 07336 (KR)**

(72) Inventors:
- **JO, Jung Ho**
**Daejeon 34122 (KR)**
- **PARK, Hang Ah**
**Daejeon 34122 (KR)**
- **HAN, Hee**
**Daejeon 34122 (KR)**
- **KWON, Soon Ho**
**Daejeon 34122 (KR)**
- **YOON, Jun Young**
**Daejeon 34122 (KR)**
- **YUN, Hyeong Seuk**
**Daejeon 34122 (KR)**

(74) Representative: **Goddar, Heinz J. et al**
**Boehmert & Boehmert**
**Anwaltspartnerschaft mbB**
**Pettenkoferstrasse 22**
**80336 München (DE)**

(56) References cited:
**JP-A- H08 231 719**
**JP-A- 2015 135 393**
**KR-A- 20130 109 018**
**KR-A- 20140 032 883**
**KR-A- 20150 001 826**
**US-A- 5 686 559**
**US-A1- 2013 123 438**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 196 228 B1

## Description

[Technical Field]

The present invention relates to a polymer suitable for being used in a liquid crystal aligning agent, a liquid crystal aligning agent including the polymer, a liquid crystal alignment film formed from the liquid crystal aligning agent, and a liquid crystal display device including the liquid crystal alignment film.

[Background Art]

In a liquid crystal display device, a liquid crystal alignment film functions to align liquid crystals in a predetermined direction. In detail, the liquid crystal alignment film plays a role of a director in aligning liquid crystal molecules. When the liquid crystal molecules are moved by the influence of an electric field to display an image, the liquid crystal alignment film allows the liquid crystal molecules to be oriented in a proper direction. Generally, it is necessary to uniformly align the liquid crystal molecules in order to achieve uniform brightness and a high contrast ratio in the liquid crystal display device.

The common method of aligning the liquid crystal molecules includes coating a polymer membrane such as a polyimide on a substrate such as glass, etc., and rubbing the surface of the substrate with a fiber such as nylon or polyester in a predetermined direction. However, the rubbing method may cause serious problems while fabricating a liquid crystal panel due to fine dust or electrostatic discharge (ESD) that may be generated while rubbing the polymer membrane with the fiber.

In order to solve the problems of the rubbing method, a photo-radiation method has been recently studied, in which the liquid crystal molecules are aligned by inducing anisotropy on the polymer membrane not by rubbing but by irradiating light.

Many materials have been proposed as materials to be used in photo-alignment methods. Of them, polyamic acid has been mainly used for favorable performances of the liquid crystal alignment film. However, there is a problem that it is difficult to provide a stable liquid crystal alignment film by using the polyamic acid because of a polymer degradation reaction due to a reversible reaction during a sintering process of forming the liquid crystal alignment film or during storage.

[Disclosure]

[Technical Problem]

The present invention provides a polymer capable of providing a liquid crystal aligning agent, which effectively inhibits a polymer degradation reaction in a sintering process of a liquid crystal alignment film and exhibits a high imidization rate.

Further, the present invention provides a liquid crystal aligning agent including the polymer, a liquid crystal alignment film formed from the liquid crystal aligning agent, and a liquid crystal display device including the liquid crystal alignment film.

[Technical Solution]

Hereinafter, a polymer for a liquid crystal aligning agent, a liquid crystal aligning agent including the polymer, a method of forming a liquid crystal alignment film using the liquid crystal aligning agent, and a liquid crystal display device including the liquid crystal alignment film according to specific embodiments of the present invention will be described.

According to an embodiment of the present invention, provided is a polymer for a liquid crystal aligning agent, including a repeating unit represented by the following Chemical Formula 1, a repeating unit represented by the following Chemical Formula 2, and a repeating unit represented by the following Chemical Formula 3, in which the repeating unit represented by the following Chemical Formula 1 is included in an amount of 1 to 30 mol% with respect to the total repeating units represented by the following Chemical Formulae 1 to 3:

[Chemical Formula 1]

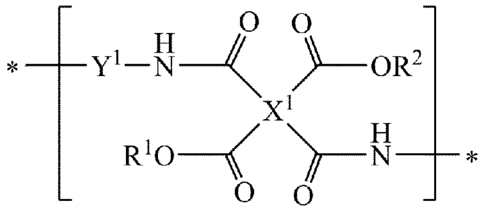

[Chemical Formula 2]

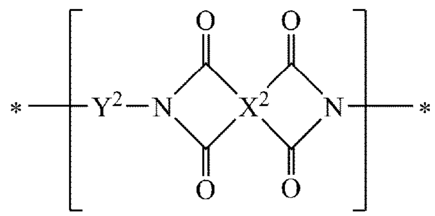

[Chemical Formula 3]

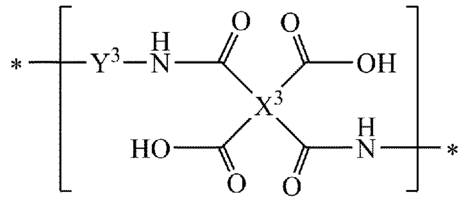

wherein $X^1$ to $X^3$ are each independently a tetravalent organic group derived from hydrocarbon having 4 to 20 carbon atoms, or a tetravalent organic group, in which one or more hydrogens are substituted with halogen or one or more $-CH_2-$ are substituted with -O-, -CO-, -S-, -SO-, $-SO_2-$ or -CONH- in order to prevent direct linkage of oxygen or sulfur atoms,

$R^1$ and $R^2$ are each independently hydrogen or an alkyl group having 1 to 10 carbon atoms, provided that not all $R^1$ and $R^2$ are hydrogen,

$Y^1$ to $Y^3$ are each independently a divalent organic group represented by the following Chemical Formula 4,

[Chemical Formula 4]

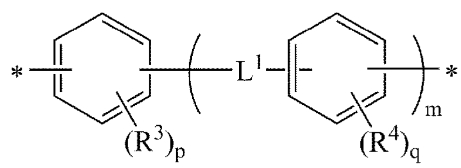

wherein $R^3$ and $R^4$ are each independently halogen, a cyano group, an alkyl group 1 to 10 having carbon atoms, an alkenyl group having 2 to 10 carbon atoms, an alkoxy group having 1 to 10 carbon atoms, a fluoroalkyl group having 1 to 10 carbon atoms, or a fluoroalkoxy group having 1 to 10 carbon atoms,

p and q are each independently an integer of 0 to 4,

$L^1$ is a single bond, -O-, -CO-, -S-, $-SO_2-$, $-C(CH_3)_2-$, $-C(CF_3)_2-$, -CONH-, -COO-,$-(CH_2)_z-$, $-O(CH_2)_zO-$, $-O(CH_2)_z-$, $-OCH_2-C(CH_3)_2-CH_2O-$ or $-COO-(CH_2)_z-OCO-$,

z is an integer of 1 to 10, and

m is an integer of 0 to 3.

Unless otherwise specified herein, the following terms may be defined as follows.

The hydrocarbon having 4 to 20 carbon atoms may be alkane having 4 to 20 carbon atoms, alkene having 4 to 20 carbon atoms, alkyne having 4 to 20 carbon atoms, cycloalkane having 4 to 20 carbon atoms, cycloalkene having 4 to 20 carbon atoms, arene having 6 to 20 carbon atoms, or a fused ring hydrocarbon formed by sharing of 2 or more atoms by one or more of the cyclic hydrocarbons, or a hydrocarbon formed by chemical binding of one or more of the hydrocarbons. Specifically, the hydrocarbon having 4 to 20 carbon atoms may be exemplified by n-butane, cyclobutane, 1-methylcyclobutane, 1,3-dimethylcyclobutane, 1,2,3,4-tetramethylcyclobutane, cyclopentane, cyclohexane, cycloheptane, cyclooctane, cyclohexene, 1-methyl-3-ethylcyclohexene, bicyclohexyl, benzene, biphenyl, diphenylmethane, 2,2-diphenylpropane, 1-ethyl-1,2,3,4-tetrahydronaphthalene, 1,6-diphenylhexane, etc.

The alkyl group having 1 to 10 carbon atoms may be a linear, branched, or cyclic alkyl group. Specifically, the alkyl group having 1 to 10 carbon atoms may be a linear alkyl group having 1 to 10 carbon atoms; a linear alkyl group having 1 to 5 carbon atoms; a branched or cyclic alkyl group having 3 to 10 carbon atoms; or a branched or cyclic alkyl group having 3 to 6 carbon atoms. More specifically, the alkyl group having 1 to 10 carbon atoms may be exemplified by a methyl group, an ethyl group, a n-propyl group, an iso-propyl group, a n-butyl group, an iso-butyl group, a tert-butyl group, a n-pentyl group, an iso-pentyl group, a neo-pentyl group, a cyclohexyl group, etc.

The alkoxy group having 1 to 10 carbon atoms may be a linear, branched, or cyclic alkoxy group. Specifically, the alkoxy group having 1 to 10 carbon atoms may be a linear alkoxy group having 1 to 10 carbon atoms; a linear alkoxy group having 1 to 5 carbon atoms; a branched or cyclic alkoxy group having 3 to 10 carbon atoms; or a branched or cyclic alkoxy group having 3 to 6 carbon atoms. More specifically, the alkoxy group having 1 to 10 carbon atoms may be exemplified by a methoxy group, an ethoxy group, a n-propoxy group, an iso-propoxy group, a n-butoxy group, an iso-butoxy group, a tert-butoxy group, a n-pentoxy group, an iso-pentoxy group, a neo-pentoxy group, a cycloheptoxy group, etc.

The fluoroalkyl group having 1 to 10 carbon atoms may be an alkyl group having 1 to 10 carbon atoms, in which one or more hydrogens are substituted with fluorine, and the fluoroalkoxy group having 1 to 10 carbon atoms may be an alkoxy group having 1 to 10 carbon atoms, in which one or more hydrogens are substituted with fluorine.

The alkenyl group having 2 to 10 carbon atoms may be a linear, branched, or cyclic alkenyl group. Specifically, the alkenyl group having 2 to 10 carbon atoms may be a linear alkenyl group having 2 to 10 carbon atoms, a linear alkenyl group having 2 to 5 carbon atoms, a branched alkenyl group having 3 to 10 carbon atoms, a branched alkenyl group having 3 to 6 carbon atoms, a cyclic alkenyl group having 5 to 10 carbon atoms, or a cyclic alkenyl group having 6 to 8 carbon atoms. More specifically, the alkenyl group having 2 to 10 carbon atoms may be exemplified by an ethenyl group, a propenyl group, a butenyl group, a pentenyl group, a cyclohexenyl group, etc.

The halogen may be fluorine (F), chlorine (Cl), bromine (Br), or iodine (I).

A multivalent organic group derived from an arbitrary compound refers to a moiety, in which a plurality of hydrogen atoms binding to the arbitrary compound is removed. For example, a tetravalent organic group derived from cyclobutane refers to a moiety, in which any 4 hydrogen atoms binding to cyclobutane are removed.

In the present invention, -* in Chemical Formula refers to a moiety, in which hydrogen in the corresponding position is removed. For example,

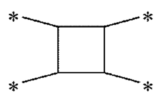

refers to a moiety, in which 4 hydrogen atoms binding to carbons at positions 1, 2, 3, and 4 of cyclobutane are removed, that is, refers to any one of tetravalent organic groups derived from cyclobutane.

The known liquid crystal alignment films were fabricated by coating and sintering polyamic acid. However, it is apprehended that polyamic acid may undergo a polymer degradation reaction by a reversible reaction during a heat treatment process, and its molecular weight may be decreased by the degradation reaction of the polyamic acid during storage. To solve these problems, polyamic acid ester has been used as a material for the liquid crystal alignment film, but there is a problem that polyamic acid ester exhibits a very low imidization rate during a sintering process and thus it is difficult to provide a reliable liquid crystal alignment film.

Accordingly, the present inventors performed experiments to confirm that when a polymer including the repeating units of Chemical Formulae 1 to 3 is used, it is possible to provide a liquid crystal aligning agent showing excellent coating property and a high imidization rate without concern about polymer degradation reaction during the sintering process or during storage, thereby completing the present invention.

Specifically, the polymer according to an embodiment includes the repeating units of Chemical Formulae 1 to 3. In the repeating units of Chemical Formulae 1 to 3, $X^1$ to $X^3$ may be diverse tetravalent organic groups as described above, and $Y^1$ to $Y^3$ may be diverse divalent organic groups as described above.

For example, $X^1$ to $X^3$ may be each independently tetravalent organic groups described in the following Chemical

Formula 5:

[Chemical Formula 5]

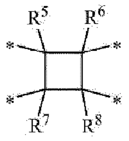, 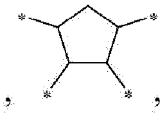, 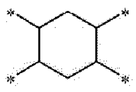, 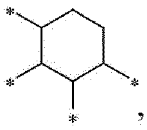, 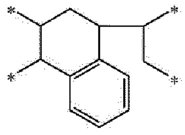, 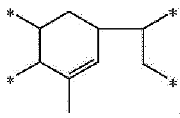, 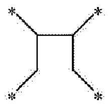,

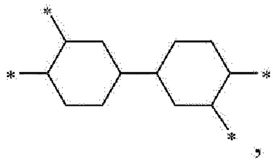, 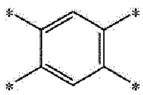, 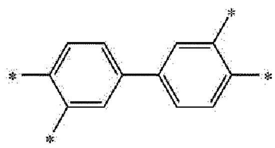 or 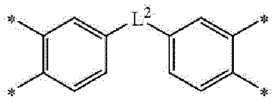

wherein $R^5$ to $R^8$ are each independently hydrogen or an alkyl group having 1 to 6 carbon atoms,
$L^2$ is any one selected from the group consisting of a single bond, -O-, -CO-, -S-, -SO-,-$SO_2$-, -$CR^9R^{10}$-, -CONH-, phenylene, and combinations thereof, and
$R^9$ and $R^{10}$ are each independently hydrogen, an alkyl group or a fluoroalkyl group having 1 to 10 carbon atoms.

Particularly, at least one of $X^1$ to $X^3$ may be a tetravalent organic group represented by the following Chemical Formula 5-1 in Chemical Formula 5:

[Chemical Formula 5-1]

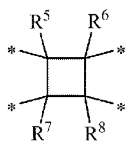

wherein definitions of $R^5$ to $R^8$ are the same as those in Chemical Formula 5.

As described above, a polymer in which at least one of $X^1$ to $X^3$ is a tetravalent organic group of Chemical Formula 5-1 is readily degraded by photo irradiation to achieve excellent liquid crystal alignment.

Meanwhile, $Y^1$ to $Y^3$ are defined as a divalent organic group represented by Chemical Formula 4, thereby providing a polymer for liquid crystal aligning agent of various structures, which is able to exhibit the above effects.

In Chemical Formula 4, hydrogen binds to carbon which is not substituted with $R^3$ or $R^4$, and when p or q is an integer of 2 to 4, a plurality of $R^3$ or $R^4$ may be the same or different substituents. In Chemical Formula 4, m may be an integer of 0 to 3 or an integer of 0 or 1.

The repeating unit represented by Chemical Formula 1 may be included in an amount of 1 to 30 mol% with respect to the total repeating units represented by Chemical Formulae 1 to 3. If the content of the repeating unit represented by Chemical Formula 1 exceeds the above range, there is a problem in that alignment properties and alignment stability may be deteriorated.

Further, the repeating unit represented by Chemical Formula 1 may be included in an amount of 5 to 30 mol%, 5 to 29 mol%, 5 to 28 mol%, 8 to 29 mol%, or 9 to 28 mol% with respect to the total repeating units represented by Chemical Formulae 1 to 3.

If the content of the repeating unit represented by Chemical Formula 1 is lower than the above range, storage stability of the liquid crystal aligning agent may be deteriorated and electrical properties measured by a voltage holding ratio may be deteriorated. If the content exceeds the above range, the above-described problem may be generated. Accordingly, a polymer for a liquid crystal aligning agent which is excellent in all terms of the storage stability, electrical properties, alignment property, and alignment stability may be provided by including the repeating unit represented by Chemical Formula 1 in the above-described range.

The repeating units represented by Chemical Formulae 2 and 3 may be included in a proper content according to desired properties.

Specifically, the repeating unit represented by Chemical Formula 2 may be included in an amount of 10 to 70 mol%, 20 to 70 mol%, 25 to 70 mol%, 10 to 65 mol%, 20 to 65 mol% or 30 to 65 mol% with respect to the total repeating

units represented by Chemical Formulae 1 to 3. The repeating unit exhibits appropriate solubility within this range, thereby providing a polymer for a liquid crystal aligning agent showing excellent processibility and a high imidization rate.

Further, the repeating unit represented by Chemical Formula 3 may be included in an amount of 1 to 60 mol%, 10 to 60 mol%, 15 to 60 mol%, 1 to 55 mol%, 10 to 55 mol% or 15 to 55 mol% with respect to the total repeating units represented by Chemical Formulae 1 to 3. The repeating unit exhibits excellent coating property within this range, thereby providing a polymer for a liquid crystal aligning agent showing excellent processibility and a high imidization rate.

The polymer is used as a liquid crystal aligning agent, thereby providing a liquid crystal alignment film with excellent stability and reliability.

Meanwhile, according to another embodiment of the present invention, provided is a preparation method of the polymer. Specifically, the polymer may be prepared by the steps of preparing ester of the following Chemical Formula 7 by esterification reaction of tetracarboxylic acid of the following Chemical Formula 6 or an anhydride thereof with alcohol; preparing amic acid ester of the following Chemical Formula 9 by reacting the ester of Chemical Formula 7 and amine of the following Chemical Formula 8; preparing diamine of the following Chemical Formula 10 by reducing the amic acid ester of Chemical Formula 9; preparing a polymer composed of amic acid and amic acid ester by reacting the diamine of Chemical Formula 10 with tetracarboxylic acid or an anhydride thereof; and performing imidization of the polymer composed of amic acid and amic acid ester:

[Chemical Formula 6]

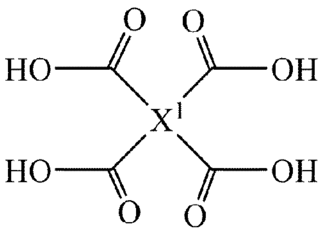

or

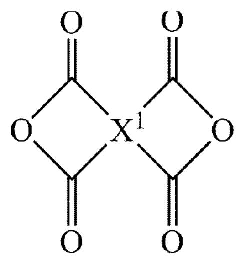

[Chemical Formula 7]

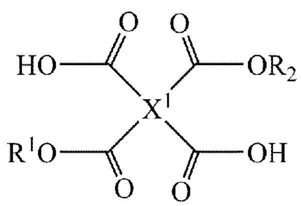

[Chemical Formula 8]

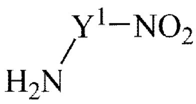

[Chemical Formula 9]

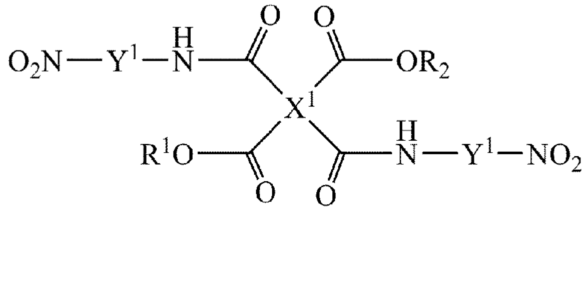

[Chemical Formula 10]

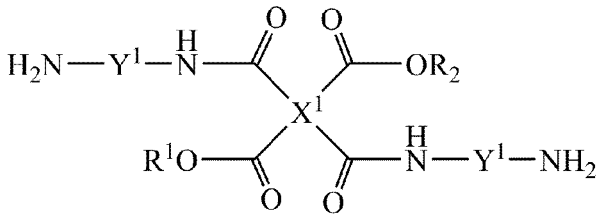

wherein $X^1$ is a tetravalent organic group derived from hydrocarbon having 4 to 20 carbon atoms, or a tetravalent organic group, in which one or more hydrogens are substituted with halogen or one or more $-CH_2-$ are substituted with -O-, -CO-, -S-, -SO-, $-SO_2-$ or -CONH-in order to prevent direct linkage of oxygen or sulfur atoms,
$R^1$ and $R^2$ are each independently hydrogen or an alkyl group having 1 to 10 carbon atoms, provided that not all $R^1$ and $R^2$ are hydrogen,
$Y^1$ is each independently a divalent organic group represented by the following Chemical Formula 4,

[Chemical Formula 4]

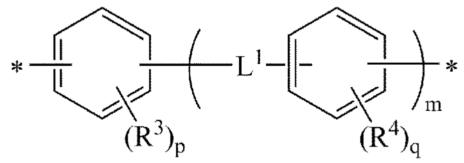

wherein $R^3$ and $R^4$ are each independently halogen, a cyano group, an alkyl group 1 to 10 having carbon atoms, an alkenyl group having 2 to 10 carbon atoms, an alkoxy group having 1 to 10 carbon atoms, a fluoroalkyl group having 1 to 10 carbon atoms, or a fluoroalkoxy group having 1 to 10 carbon atoms,
p and q are each independently an integer of 0 to 4,
$L^1$ is a single bond, -O-, -CO-, -S-, $-SO_2-$, $-C(CH_3)_2-$, $-C(CF_3)_2-$, -CONH-, -COO-,$-(CH_2)_z-$, $-O(CH_2)_zO-$, $-O(CH_2)_z-$, $-OCH_2-C(CH_3)_2-CH_2O-$ or $-COO-(CH_2)_z-OCO-$,
z is an integer of 1 to 10, and
m is an integer of 0 to 3.

When the above-described polymer is prepared by the preparation method of another embodiment, the contents of the repeating units of Chemical Formulae 1 to 3 may be easily controlled.

Specifically, in the step of preparing the ester of Chemical Formula 7, the ester of Chemical Formula 7 may be provided by esterification reaction of tetracarboxylic acid of Chemical Formula 6 or an anhydride thereof with alcohol. $X^1$ in Chemical Formula 6 may be a tetravalent organic group in Chemical Formula 5 as described above. The alcohol may be alcohol containing an alkyl group having 1 to 10 carbon atoms, and for example, methanol, ethanol, propanol, butanol, pentanol, hexanol, etc. may be used. Esterification conditions are not particularly limited, but may be properly controlled referring to the esterification conditions known in the art to which the present invention pertains.

The ester of Chemical Formula 7 thus prepared is reacted with the amine of Chemical Formula 8 to provide the amic acid ester of Chemical Formula 9. In this regard, $Y^1$ of Chemical Formula 8 may be various divalent organic groups represented by Chemical Formula 4, and more specifically, the divalent organic groups listed in the description of the polymer of an embodiment. Preparation conditions of the amic acid ester are not particularly limited, but may be properly controlled referring to the known preparation conditions of amic acid. To prepare the amic acid ester of Chemical Formula 9 in a higher yield, if necessary, the hydroxy group of the ester of Chemical Formula 7 may be substituted with a leaving group which is easily detached.

When the amic acid ester of Chemical Formula 9 is prepared by the above step, it is reduced to provide the diamine of Chemical Formula 10. Reduction conditions are not particularly limited, but for non-limiting example, the amic acid ester of Chemical Formula 9 may be reduced under a hydrogen atmosphere in the presence of a Pd-C catalyst.

The diamine of Chemical Formula 10 prepared by the above steps is reacted with tetracarboxylic acid or an anhydride thereof commonly used in the preparation of polyamic acid to prepare a polymer composed of amic acid and amic acid ester. Reaction conditions may be properly controlled referring to the preparation conditions of polyamic acid known in the art to which the present invention pertains. The obtained polymer composed of amic acid and amic acid

ester is subjected to imidization, thereby preparing the above described polymer having the repeating units of Chemical Formulae 1 to 3.

Meanwhile, according to still another embodiment of the present invention, provided is a liquid crystal aligning agent including the polymer.

Since the liquid crystal aligning agent includes the above-described polymer, a reduction in the stability and reliability due to a polymer degradation reaction during a sintering process and during storage may be effectively inhibited, and superior coating property and excellent imidization rate may be achieved at the same time.

Such a liquid crystal aligning agent may be provided by a variety of methods known in the art to which the present invention pertains, except that the above described polymer is included.

For non-limiting example, the above-described polymer may be dissolved or dispersed in an organic solvent to provide the liquid crystal aligning agent.

A specific example of the organic solvent may be N,N-dimethylformamide, N,N-dimethylacetamide, N-methyl-2-pyrrolidone, N-methylcaprolactam, 2-pyrrolidone, N-ethylpyrrolidone, N-vinylpyrrolidone, dimethylsulfoxide, tetramethylurea, pyridine, dimethylsulfone, hexamethylsulfoxide, $\gamma$-butyrolactone, 3-methoxy-N,N-dimethylpropaneamide, 3-ethoxy-N,N-dimethylpropaneamide, 3-butoxy-N,N-dimethylpropaneamide, 1,3-dimethyl-imidazolidinone, ethylamylketone, methylnonylketone, methylethylketone, methylisoamylketone, methylisopropylketone, cyclohexanone, ethylenecarbonate, propylenecarbonate, diglyme, 4-hydroxy-4-methyl-2-pentaneone, etc. These solvents may be used alone or in combination.

Further, the liquid crystal aligning agent may further include other components in addition to the polymer and the organic solvent. For non-limiting example, when the liquid crystal aligning agent is applied, an additive capable of increasing uniformity of film thickness or surface smoothness, an additive capable of improving adhesion between the liquid crystal alignment film and the substrate, an additive capable of changing the dielectric constant or conductivity of the liquid crystal alignment film, or an additive capable of increasing compactness of the liquid crystal alignment film may be further included. The additive may be exemplified by a variety of solvents, surfactants, silane-based compounds, dielectric substances, crosslinkable compounds, etc.

Meanwhile, according to still another embodiment, provided is a liquid crystal alignment film including the liquid crystal aligning agent.

The liquid crystal alignment film including the liquid crystal aligning agent means that the liquid crystal alignment film includes the liquid crystal aligning agent as it is, or the liquid crystal alignment film includes a product resulting from chemical reaction of the liquid crystal aligning agent.

The liquid crystal alignment film may be formed by a variety of methods known in the art to which the present invention pertains, except that the above-described liquid crystal aligning agent is used.

For non-limiting example, the liquid crystal alignment film may be formed by applying the above-described liquid crystal aligning agent onto a substrate, followed by sintering and photo irradiation. In this regard, the sintering and photo irradiation may be performed at the same time, and the photo irradiation may be omitted.

Specifically, the above-described liquid crystal aligning agent is applied onto a substrate, on which the liquid crystal alignment film is intended to be formed. As the substrate, a variety of substrates used in the art to which the present invention pertains may be used. As the application method, a variety of application methods used in the art to which the present invention pertains may be employed. For non-limiting example, the liquid crystal aligning agent may be applied by screen printing, offset printing, flexo printing, inkjet, etc.

Thereafter, the coating film previously fabricated is sintered. The sintering may be performed at about 50 to 300°C by a heating means such as a hot plate, a hot air circulator, an infrared heater, etc. Through this sintering process, the repeating units represented by Chemical Formula 1 and 3 in the polymers included in the liquid crystal aligning agent may be imidized. The polymer may include the repeating unit represented by Chemical Formula 2 which has been previously imidized, thereby showing a remarkably improved imidization rate, compared to the known polymer.

After the sintering process, light is irradiated onto the previously prepared sintered film according to a desired alignment direction, thereby providing liquid crystal orientation. More specifically, UV or visible rays at a wavelength of about 150 to 450 nm is irradiated onto the sintered film, and linearly polarized light may be irradiated in a vertical or inclined direction.

Meanwhile, according to still another embodiment of the present invention, provided is a liquid crystal display device including the above described liquid crystal alignment film.

The liquid crystal alignment film may be introduced into a liquid crystal cell by a known method, and the liquid crystal cell may be introduced into a liquid crystal display device by a known method. The liquid crystal alignment film is fabricated from the polymer including the repeating units of Chemical Formulae 1 and 2, thereby showing superior stability as well as excellent physical properties. Accordingly, a liquid crystal display device with high reliability may be provided.

[Effect of the Invention]

A polymer according to an embodiment of the present invention effectively inhibits a polymer degradation reaction during a sintering process of forming a liquid crystal alignment film or during storage, and exhibits excellent coating property upon coating and a high imidization rate upon the sintering process, thereby providing a liquid crystal aligning agent showing superior alignment stability and electrical properties as well as high stability and reliability.

[Detailed Description of the Embodiments]

Hereinafter, actions and effects of the present invention will be described in more detail with reference to specific exemplary embodiments of the present invention. However, these exemplary embodiments are for illustrative purposes only, and the scope of the present invention is not intended to be limited thereby.

Synthesis Example 1: Synthesis of DA-1

Amic acid ester-containing diamine DA-1 was synthesized from acid anhydride according to the following Reaction Scheme 1.

[Reaction Scheme 1]

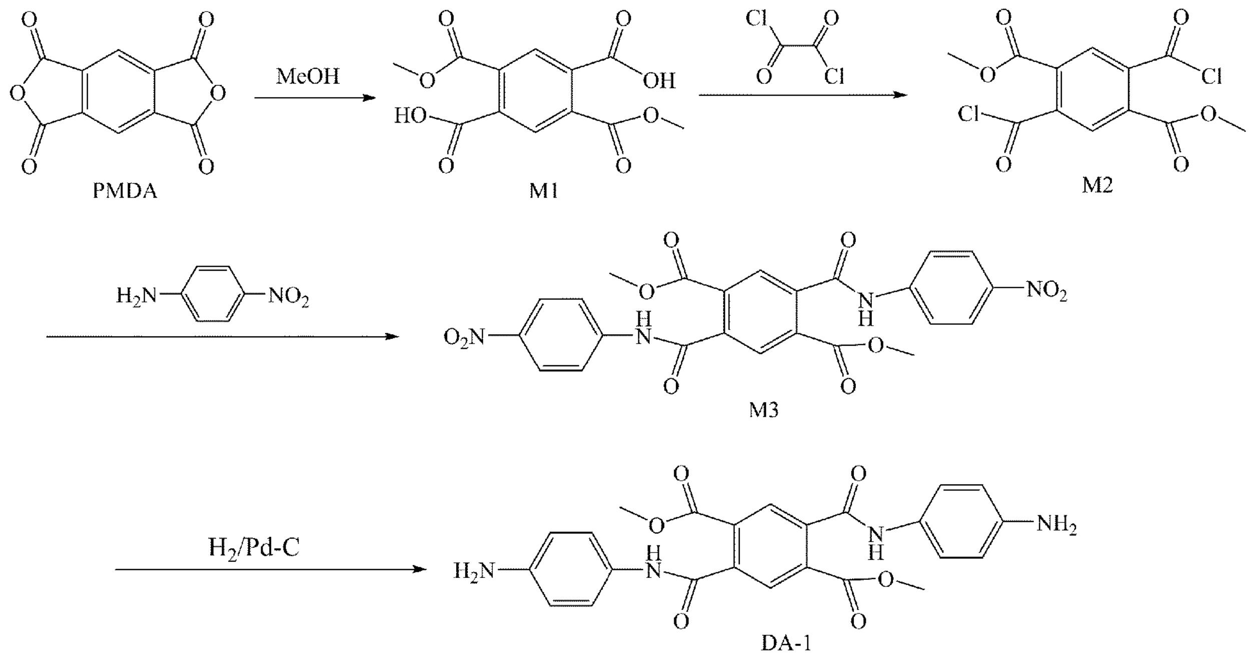


PMDA, M1, M2, M3, DA-1

25 g of pyromellitic dianhydride (PMDA) was added to 250 mL of methanol, and 1-2 drop(s) of hydrochloric acid was added. Subsequently, a mixture thus obtained was refluxed under heating at 75°C for 5 hours. Then, a solvent was removed from a resulting product under reduced pressure, and ethyl acetate (EA) and 300 mL of n-hexane were added thereto for solidification. A solid thus produced was filtered under reduced pressure and dried at 40°C under reduced pressure to obtain 32 g of M1.

100 mL of toluene was added to 32 g of M1 thus obtained, and 35 g of oxalyl chloride was added at room temperature. 2-3 drops of dimethylformamide (DMF) were added dropwise, and stirred at 50°C for 16 hours. A product thus obtained was cooled to room temperature, and the solvent and the residual oxalyl chloride were removed from the product under reduced pressure. 300 mL of n-hexane was added to a yellow solid product thus obtained, and refluxed under heating at 80°C. The heated reaction solution was filtered to remove impurities which were not dissolved in n-hexane. A solution thus obtained was slowly cooled to room temperature, and a produced white crystal was filtered. The crystal thus obtained was dried in an oven under reduced pressure at 40°C to obtain 32.6 g of M2.

29.6 g of 4-nitroaniline and 21.7 g of triethanolamine (TEA) were added to 400 mL of tetrahydrofuran (THF), and 32.6 g of M2 was added thereto at room temperature. A mixture thus obtained was stirred at room temperature for 16 hours to filter a produced precipitate. 400 mL of dichloromethane was added to a filtrate, and washed with a 0.1 N

hydrochloric acid aqueous solution, and then washed with a saturated sodium hydrogen carbonate ($NaHCO_3$) aqueous solution. An organic solution thus washed was filtered under reduced pressure to obtain a solid product, which was recrystallized with dichloromethane to obtain 43 g of M3.

43 g of M3 was added to a high pressure reactor and dissolved in 500 mL of THF. Subsequently, 2.2 g of 10 wt% Pd-C was added to the high pressure reactor, and a mixture thus obtained was stirred under hydrogen gas ($H_2$) of 3 atm for 16 hours at room temperature. After reaction, Pd-C was removed using a celite filter, and filtered. A filtrate was concentrated under reduced pressure to obtain 37 g of amic acid ester-containing diamine DA-1.

Synthesis Example 2: Synthesis of DA-2

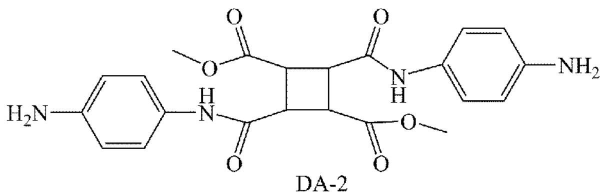

DA-2

DA-2 having the above structure was synthesized in the same manner as in Synthesis Example 1, except that cyclobutanetetracarboxylic acid dianhydride (CBDA) was used instead of PMDA in Synthesis Example 1.

Example 1: Preparation of Polymer for Liquid Crystal Aligning Agent

5.0 g of DA-1 and 2.73 g of p-phenylene diamine (PDA) were completely dissolved in 140 g of anhydrous N-methyl pyrrolidone (NMP). In an ice bath, 9.8 g of 1,3-dimethyl-cyclobutanetetracarboxylic acid dianhydride (DMCBDA) was added to the mixture, and stirred at room temperature for 16 hours to synthesize a copolymer (PAE-1) composed of amic acid and amic acid ester.

7.2 g of acetic anhydride and 5.6 g of pyridine were added to the PAE-1 solution thus obtained, and stirred at room temperature for 24 hours. A product thus obtained was added to an excess amount of distilled water to produce a precipitate. Subsequently, the produced precipitate was filtered and washed with distilled water twice and washed with methanol three times. A solid product thus obtained was dried in an oven at 40°C under reduced pressure for 24 hours to obtain 9.8 g of a copolymer (PAEI-1) composed of amic acid, amic acid ester, and imide. A molecular weight of the PAEI-1 was examined by GPC, and as a result, its number average molecular weight (Mn) was 15,800 g/mol and its weight average molecular weight (Mw) was 32,000 g/mol.

Meanwhile, a composition of the PAEI-1 was quantitatively analyzed as follows.

N-H peaks in IR spectra of PAE-1 and PAEI-1 obtained by an IR spectrometer were compared to analyze the content of imide repeating unit. In detail, an aromatic peak around 1520 $cm^{-1}$ was determined as a standard and used for normalization, and an area (S) of N-H peak around 1540 $cm^{-1}$ was integrated and put in the following Equation 1, thereby quantify an imidization rate.

[Equation 1]

$$\text{Imidization rate } (\%) = [(S_{PAE} - S_{PAEI})/S_{PAE}] * 100$$

wherein $S_{PAE}$ is an area of N-H peak of PAE appearing around 1540 $cm^{-1}$, and $S_{PAEI}$ is an area of N-H peak of PAEI appearing around 1540 $cm^{-1}$.

An amic acid ester ratio was confirmed by comparing the methoxy peaks of amic acid ester appearing at 3.5 to 3.9 ppm in $^1$H-NMR spectrum of PAEI. The imide ratio and the amic acid ester ratio were determined, and then the remaining value was determined as an amic acid ratio to analyze the composition of PAEI.

As a result of analyzing the composition of PAEI-1 by the method, the amic acid ratio was 20 mol%, the amic acid ester ratio was 22 mol%, and the imide ratio was 58 mol%.

Example 2: Preparation of Polymer for Liquid Crystal Aligning Agent

PAEI-2 was prepared in the same manner as in Example 1, except that 5.0 g of DA-2, 1.84 g of PDA, 6.24 g

of DMCBDA, 118 g of NMP, 5.6 g of acetic acid anhydride, and 4.4 g of pyridine were used in Example 1. A molecular weight of the PAEI-2 was examined by GPC, and as a result, its number average molecular weight (Mn) was 15,500 g/mol and its weight average molecular weight (Mw) was 27,000 g/mol. As a result of analyzing the composition of PAEI-2, the amic acid ratio was 21 mol%, the amic acid ester ratio was 28 mol%, and the imide ratio was 51 mol%.

Example 3: Preparation of Polymer for Liquid Crystal Aligning Agent

PAEI-3 was prepared in the same manner as in Example 1, except that 4.0 g of DA-1, 2.81 g of PDA, 1.59 g of oxydianiline (ODA), 9.5 g of DMCBDA, 161 g of NMP, 8.7 g of acetic acid anhydride, and 6.7 g of pyridine were used in Example 1. A molecular weight of the PAEI-3 was examined by GPC, and as a result, its number average molecular weight (Mn) was 17,000 g/mol and its weight average molecular weight (Mw) was 36,000 g/mol. As a result of analyzing the composition of PAEI-3, the amic acid ratio was 30 mol%, the amic acid ester ratio was 15 mol%, and the imide ratio was 55 mol%.

Example 4: Preparation of Polymer for Liquid Crystal Aligning Agent

PAEI-4 was prepared in the same manner as in Example 1, except that 2.0 g of DA-2, 3.44 g of PDA, 2.2 g of 4,4'-(1,3-propanediyl)dioxydianiline (PODA), 7.94 g of DMCBDA, 2.67 g of 3,3',4,4'-biphenyltetracarboxylic acid dianhydride (BPDA), 0.27 g of phthalic anhydride, 167 g of NMP, 9.2 g of acetic acid anhydride, and 7.2 g of pyridine were used in Example 1. A molecular weight of the PAEI-4 was examined by GPC, and as a result, its number average molecular weight (Mn) was 13,500 g/mol and its weight average molecular weight (Mw) was 28,000 g/mol. As a result of analyzing the composition of PAEI-4, the amic acid ratio was 29 mol%, the amic acid ester ratio was 9 mol%, and the imide ratio was 62 mol%.

Example 5: Preparation of Polymer for Liquid Crystal Aligning Agent

PAEI-5 was prepared in the same manner as in Example 3, except that PAE-3 was prepared and then acetic acid anhydride and pyridine were added and stirred at room temperature for 6 hours in Example 3. A molecular weight of the PAEI-5 was examined by GPC, and as a result, its number average molecular weight (Mn) was 17,500 g/mol and its weight average molecular weight (Mw) was 38,000 g/mol. As a result of analyzing the composition of PAEI-5, the amic acid ratio was 44 mol%, the amic acid ester ratio was 16 mol%, and the imide ratio was 40 mol%.

Example 6: Preparation of Polymer for Liquid Crystal Aligning Agent

PAEI-6 was prepared in the same manner as in Example 3, except that PAE-3 was prepared and then acetic acid anhydride and pyridine were added and stirred at room temperature for 3 hours in Example 3. A molecular weight of the PAEI-6 was examined by GPC, and as a result, its number average molecular weight (Mn) was 17,500 g/mol and its weight average molecular weight (Mw) was 38,000 g/mol. As a result of analyzing the composition of PAEI-6, the amic acid ratio was 52 mol%, the amic acid ester ratio was 16 mol%, and the imide ratio was 32 mol%.

Example 7: Preparation of Polymer for Liquid Crystal Aligning Agent

PAEI-7 was prepared in the same manner as in Example 1, except that 0.7 g of DA-2, 4.12 g of PDA, 8.73 g of DMCBDA, 122 g of NMP, 7.9 g of acetic acid anhydride, and 6.2 g of pyridine were used in Example 1. A molecular weight of the PAEI-7 was examined by GPC, and as a result, its number average molecular weight (Mn) was 14,000 g/mol and its weight average molecular weight (Mw) was 23,000 g/mol. As a result of analyzing the composition of PAEI-7, the amic acid ratio was 39 mol%, the amic acid ester ratio was 4 mol%, and the imide ratio was 57 mol%.

Comparative Example 1: Preparation of Polyamic Acid

5.0 g of PDA and 2.13 g of ODA were completely dissolved in 140 g of anhydrous NMP. In an ice bath, 10.1 g of DMCBDA and 2.52 g of PMDA were added to the mixture, and stirred at room temperature for 16 hours to synthesize a polyamic acid (PAA-1). A molecular weight of the PAA-1 was examined by GPC, and as a result, its number average molecular weight (Mn) was 22,000 g/mol and its weight average molecular weight (Mw) was 41,000 g/mol.

Comparative Example 2: Preparation of Polyamic Acid Ester

PAE-3 was prepared in the same manner as in Example 3. However, imidization by addition of acetic acid

anhydride and pyridine to PAE-3 was not performed. A molecular weight of the PAE-3 was examined by GPC, and as a result, its number average molecular weight (Mn) was 22,000 g/mol and its weight average molecular weight (Mw) was 43,000 g/mol.

Comparative Example 3: Preparation of Partially Imidized Polyamic Acid

PAA-1 was prepared in the same manner as in Comparative Example 1. 11.6 g of acetic acid anhydride and 8.9 g of pyridine were added to PAA-1 and stirred at room temperature for 24 hours. A product thus obtained was added to an excess amount of distilled water to produce a precipitate. Subsequently, the produced precipitate was filtered and washed with distilled water twice and washed with methanol three times. A solid product thus obtained was dried in an oven at 40°C under reduced pressure for 24 hours to obtain a copolymer (PAI-1) composed of amic acid and imide. A molecular weight of the PAI-1 was examined by GPC, and as a result, its number average molecular weight (Mn) was 17,000 g/mol and its weight average molecular weight (Mw) was 36,000 g/mol. As a result of analyzing the composition of PAI-1, the amic acid ratio was 45 mol%, and the imide ratio was 55 mol%.

Comparative Example 4: Preparation of Partially Imidized Polyamic Acid Ester

PEI-1 was prepared in the same manner as in Example 1, except that 10 g of DA-1, 4.8 g of DMCBDA, 133 g of NMP, 4.3 g of acetic acid anhydride, and 3.4 g of pyridine were used in Example 1. A molecular weight of the PEI-1 was examined by GPC, and as a result, its number average molecular weight (Mn) was 20,000 g/mol and its weight average molecular weight (Mw) was 41,000 g/mol. As a result of analyzing the composition of PEI-1, the amic acid ratio was 0 mol%, the amic acid ester ratio was 47 mol%, and the imide ratio was 53 mol%.

Comparative Example 5: Preparation of Polymer for Liquid Crystal Aligning Agent

PAEI-7 was prepared in the same manner as in Example 1, except that 8 g of DA-2, 1.31 g of PDA, 6.65 g of DMCBDA, 143 g of NMP, 6.1 g of acetic acid anhydride, and 4.7 g of pyridine were used in Example 1. A molecular weight of the PAEI-7 was examined by GPC, and as a result, its number average molecular weight (Mn) was 17,000 g/mol and its weight average molecular weight (Mw) was 29,000 g/mol. As a result of analyzing the composition of PAEI-7, the amic acid ratio was 17 mol%, the amic acid ester ratio was 35 mol%, and the imide ratio was 48 mol%.

Experimental Example: Test of Properties of Liquid Crystal Alignment Film

<Preparation of liquid crystal aligning agent and liquid crystal cell>

(1) Preparation of liquid crystal aligning agent

Each of the polymers prepared according to Examples 1 to 7 and Comparative Examples 1 to 5 was dissolved in a solid content of 5 wt% in a solvent mixture of NMP and n-butoxyethanol at a weight ratio of 8:2. A solution thus obtained was subjected to pressure filtration using a filter having a pore size of 0.2 μm and being made of poly(tetrafluorene ethylene) to prepare a liquid crystal aligning agent.

(2) Preparation of liquid crystal cell

The prepared liquid crystal aligning agent was used to fabricate a liquid crystal cell by the following method.

The liquid crystal aligning agent was applied onto a substrate (lower substrate) which was manufactured by forming comb-shaped IPS (in-plane switching) mode ITO electrode patterns with a thickness of 60 nm, an electrode width of 3 μm, and a gap between electrodes of 6 μm on a square glass substrate with a size of 2.5 cm X 2.7 cm and a glass substrate (upper substrate) which had no electrode patterns by a spin coating method, respectively.

Subsequently, each of the substrates onto which the liquid crystal aligning agent was applied was dried on a hot plate at about 70°C for 3 minutes, and sintered (cured) in an oven at 230°C for 30 minutes to obtain a coating film with a film thickness of 0.1 μm.

To align the coating thus obtained, UV ray at 254 nm was irradiated onto each of the coatings of the upper/lower substrates using an exposure equipped with a linear polarizer at a dose of 1 J/cm2.

Thereafter, a sealing agent impregnated with a ball spacer with a size of 3 μm was applied to the edges of the upper substrate, excluding a liquid crystal inlet. The alignment films formed on the upper and lower substrates are arranged to face each other so that the alignment directions are oriented parallel to each other. Then, the upper and lower substrates were adhered to each other, and the sealing agent was cured to form an empty cell. Liquid crystals

were injected into the empty cell to fabricate an IPS mode liquid crystal cell.

<Test of properties of liquid crystal alignment film>

(1) Test of coating property of liquid crystal aligning agent

The coating property of the liquid crystal aligning agent was evaluated according to the conditions of the coating obtained by applying the liquid crystal aligning agent. In detail, as described above, upper and lower substrates were coated with the liquid crystal aligning agents of Examples and Comparative Examples by a spin coating method, and then the upper and lower substrates to which the liquid crystal aligning agent was applied were dried on a hot plate at about 70°C for 3 minutes. The surface of the coating thus obtained was observed with the naked eye and under a microscope to inspect coating spots, pin-holes, and surface roughness of the coating. As a result, when no defects were observed, it was recorded as 'good', and when defects were observed, it was recorded as 'poor' in Table 1.

(2) Test of imidization rate of liquid crystal alignment film

IR spectrum of the coating dried on a hot plate at 70°C for 3 minutes and IR spectrum of the coating sintered (cured) in an oven at 230°C for 30 minutes after coating during fabrication of the liquid crystal cell were obtained. The areas (S) of N-H peaks around 1540cm$^{-1}$ in the IR spectra were compared, and a reduction rate after sintering at 230°C was determined as an imidization rate, and this rate was calculated and given in Table 1.

(3) Test of property of liquid crystal alignment

Polarizers were attached to the upper and lower substrates of the liquid crystal cell fabricated by the above method so that they were perpendicular to each other. The polarizer-attached liquid crystal cell was placed on a backlight of brightness of 7,000 cd/m$^2$, and light leakage was observed with the naked eye. As a result, when the liquid crystal cell was observed dark without light leakage, it was recorded as 'good', and when light leakage such as liquid crystal flow mark or bright spot is observed, it was recorded as 'poor' in Table 1.

(4) Test of stability of liquid crystal alignment

The polarizer-attached liquid crystal cell which was fabricated to evaluate the property of the liquid crystal alignment (3) was used to evaluate the stability of the liquid crystal alignment.

In detail, the polarizer-attached liquid crystal cell was attached on a backlight of 7,000 cd/m$^2$ and luminance at the black state was measured using a luminance meter PR-880. The liquid crystal cell was operated at room temperature and an alternating voltage of 5 V for 24 hours. Thereafter, at the voltage-off state of the liquid crystal cell, luminance at the black state was measured as described above.

A difference between the initial luminance (L0) measured before operation of the liquid crystal cell and the later luminance (L1) measured after operation was divided by the initial luminance (L0), and then multiplied by 100 to calculate a luminance change. As the calculated luminance change is close to 0%, the alignment stability is considered as 'excellent'. The luminance change of less than 10% was recorded as 'excellent', the luminance change of 10% or more and less than 20% was recorded as 'fair', and the luminance change of 20% or more was recorded as 'poor' in Table 1.

(5) Test of voltage holding ratio (VHR) of liquid crystal cell

An electrical property, voltage holding ratio (VHR) of the liquid crystal cell fabricated by the above method was measured using a TOYO 6254. The voltage holding ratio was measured under severe conditions of 60 Hz and 60°C. The voltage holding ratio of 100% is an ideal value, and as a measurement result, the voltage holding ratio of 90% or more was recorded as 'excellent', the voltage holding ratio of less than 90% and 80% or more was recorded as 'fair', and the voltage holding ratio of less than 80% was recorded as 'poor' in Table 1.

[Table 1]

| | Coating property of liquid crystal aligning agent | Imidization rate[%] | Property of liquid crystal alignment | Alignment stability | VHR |
|---|---|---|---|---|---|
| Example 1 | Good | 83 | Good | Excellent | Excellent |
| Example 2 | Good | 80 | Good | Excellent | Excellent |

(continued)

| | Coating property of liquid crystal aligning agent | Imidization rate[%] | Property of liquid crystal alignment | Alignment stability | VHR |
|---|---|---|---|---|---|
| Example 3 | Good | 87 | Good | Excellent | Excellent |
| Example 4 | Good | 91 | Good | Excellent | Excellent |
| Example 5 | Good | 84 | Good | Excellent | Excellent |
| Example 6 | Good | 82 | Good | Excellent | Excellent |
| Example 7 | Good | 93 | Good | Excellent | fair |
| Comparative Example 1 | Good | 69 | Good | Fair | Poor |
| Comparative Example 2 | Good | 64 | Good | Poor | Fair |
| Comparative Example 3 | Good | 88 | Good | Excellent | Poor |
| Comparative Example 4 | Poor | 62 | Poor | Poor | Excellent |
| Comparative Example 5 | Good | 66 | Poor | Poor | Excellent |

## Claims

1. A polymer for a liquid crystal aligning agent, comprising a repeating unit represented by the following Chemical Formula 1, a repeating unit represented by the following Chemical Formula 2, and a repeating unit represented by the following Chemical Formula 3, wherein the repeating unit represented by the following Chemical Formula 1 is comprised in an amount of 1 to 30 mol% with respect to the total repeating units represented by the following Chemical Formulae 1 to 3:

[Chemical Formula 1]

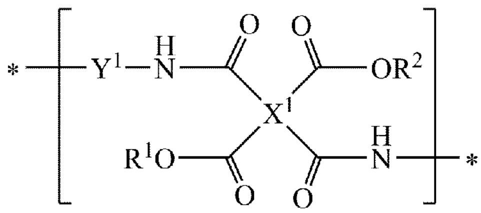

[Chemical Formula 2]

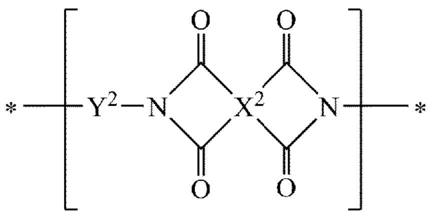

[Chemical Formula 3]

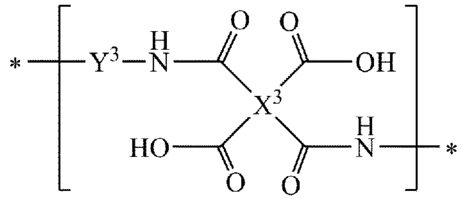

wherein $X^1$ to $X^3$ are each independently a tetravalent organic group derived from hydrocarbon having 4 to 20 carbon atoms, or a tetravalent organic group, wherein one or more hydrogens are substituted with halogen or one or more $-CH_2-$ are substituted with -O-, -CO-, -S-, -SO-, $-SO_2-$ or -CONH- in order to prevent direct linkage of oxygen or sulfur atoms,

$R^1$ and $R^2$ are each independently hydrogen or an alkyl group having 1 to 10 carbon atoms, provided that not all $R^1$ and $R^2$ are hydrogen,

$Y^1$ to $Y^3$ are each independently a divalent organic group represented by the following Chemical Formula 4,

[Chemical Formula 4]

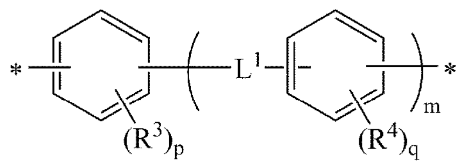

wherein $R^3$ and $R^4$ are each independently halogen, a cyano group, an alkyl group 1 to 10 having carbon atoms, an alkenyl group having 2 to 10 carbon atoms, an alkoxy group having 1 to 10 carbon atoms, a fluoroalkyl group having 1 to 10 carbon atoms, or a fluoroalkoxy group having 1 to 10 carbon atoms,

p and q are each independently an integer of 0 to 4,

$L^1$ is a single bond, -O-, -CO-, -S-, $-SO_2-$, $-C(CH_3)_2-$, $-C(CF_3)_2-$, -CONH-, -COO-, $-(CH_2)_z-$, $-O(CH_2)_zO-$, $-O(CH_2)_z-$, $-OCH_2-C(CH_3)_2-CH_2O-$ or $-COO-(CH_2)_z-OCO-$,

z is an integer of 1 to 10, and

m is an integer of 0 to 3.

2. The polymer for the liquid crystal aligning agent of claim 1, wherein $X^1$ to $X^3$ are each independently tetravalent organic groups described in the following Chemical Formula 5:

[Chemical Formula 5]

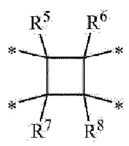 , 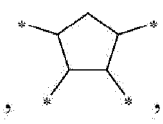 , 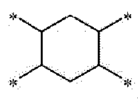 , 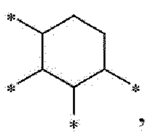 , 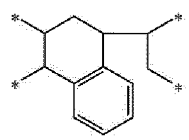 , 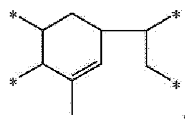 , 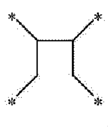 ,

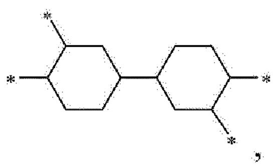 , 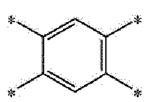 , 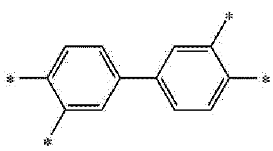 or 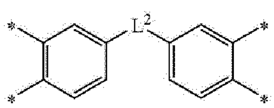

wherein $R^5$ to $R^8$ are each independently hydrogen or an alkyl group having 1 to 6 carbon atoms,

$L^2$ is any one selected from the group consisting of a single bond, -O-, -CO-, -S-, -SO-, $-SO_2-$, $-CR^9R^{10}-$, -CONH-, phenylene, and combinations thereof, and

$R^9$ and $R^{10}$ are each independently hydrogen, an alkyl group or a fluoroalkyl group having 1 to 10 carbon atoms.

**3.** The polymer for the liquid crystal aligning agent of claim 1, wherein at least one of $X^1$ to $X^3$ is a tetravalent organic group represented by the following Chemical Formula 5-1:

[Chemical Formula 5-1]

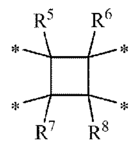

wherein $R^5$ to $R^8$ are each independently hydrogen or an alkyl group having 1 to 6 carbon atoms.

**4.** The polymer for the liquid crystal aligning agent of claim 1, comprising the repeating unit represented by Chemical Formula 1 in an amount of 5 to 30 mol% with respect to the total repeating units represented by Chemical Formulae 1 to 3.

**5.** The polymer for the liquid crystal aligning agent of claim 1, comprising the repeating unit represented by Chemical Formula 2 in an amount of 10 to 70 mol% with respect to the total repeating units represented by Chemical Formulae 1 to 3.

**6.** The polymer for the liquid crystal aligning agent of claim 1, comprising the repeating unit represented by Chemical Formula 3 in an amount of 1 to 60 mol% with respect to the total repeating units represented by Chemical Formulae 1 to 3.

**7.** A preparation method of the polymer of claim 1, comprising the steps of:

preparing ester of the following Chemical Formula 7 by esterification reaction of tetracarboxylic acid of the following Chemical Formula 6 or an anhydride thereof with alcohol;
preparing amic acid ester of the following Chemical Formula 9 by reacting the ester of Chemical Formula 7 and amine of the following Chemical Formula 8;
preparing diamine of the following Chemical Formula 10 by reducing the amic acid ester of Chemical Formula 9;
preparing a polymer composed of amic acid and amic acid ester by reacting the diamine of Chemical Formula 10 with tetracarboxylic acid or an anhydride thereof; and
performing imidization of the polymer composed of amic acid and amic acid ester:

[Chemical Formula 6]

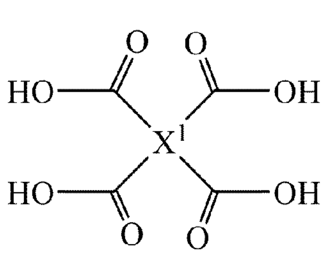

or

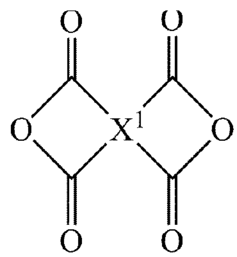

[Chemical Formula 7]

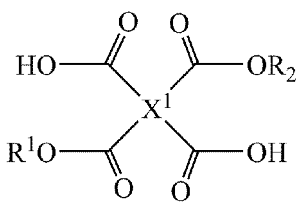

[Chemical Formula 8]

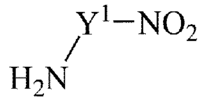

[Chemical Formula 9]

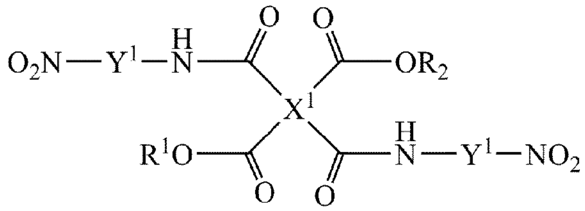

[Chemical Formula 10]

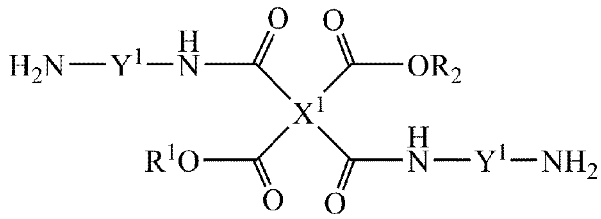

wherein $X^1$ is a tetravalent organic group derived from hydrocarbon having 4 to 20 carbon atoms, or a tetravalent organic group, wherein one or more hydrogens are substituted with halogen or one or more $-CH_2-$ are substituted with -O-, -CO-, -S-, -SO-, $-SO_2-$ or -CONH- in order to prevent direct linkage of oxygen or sulfur atoms,
$R^1$ and $R^2$ are each independently hydrogen or an alkyl group having 1 to 10 carbon atoms, provided that not all $R^1$ and $R^2$ are hydrogen,
$Y^1$ is each independently a divalent organic group represented by the following Chemical Formula 4,

[Chemical Formula 4]

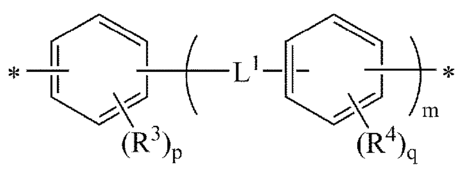

wherein $R^3$ and $R^4$ are each independently halogen, a cyano group, an alkyl group 1 to 10 having carbon atoms, an alkenyl group having 2 to 10 carbon atoms, an alkoxy group having 1 to 10 carbon atoms, a fluoroalkyl group having 1 to 10 carbon atoms, or a fluoroalkoxy group having 1 to 10 carbon atoms,
p and q are each independently an integer of 0 to 4,
$L^1$ is a single bond, -O-, -CO-, -S-, $-SO_2-$, $-C(CH_3)_2-$, $-C(CF_3)_2-$, -CONH-, -COO-,$-(CH_2)_z-$, $-O(CH_2)_zO-$, $-O(CH_2)_z-$, $-OCH_2-C(CH_3)_2-CH_2O-$ or $-COO-(CH_2)_z-OCO-$,
z is an integer of 1 to 10, and
m is an integer of 0 to 3.

**8.** A liquid crystal aligning agent comprising the polymer of any one of claims 1 to 6.

**9.** A liquid crystal alignment film comprising the liquid crystal aligning agent of claim 8.

**10.** A liquid crystal display device comprising the liquid crystal alignment film of claim 9.

## Patentansprüche

**1.** Polymer für ein Mittel zum Ausrichten eines Flüssigkristalls, umfassend eine Wiederholungseinheit, dargestellt durch die folgende chemische Formel 1, eine Wiederholungseinheit, dargestellt durch die folgende chemische Formel 2, und eine Wiederholungseinheit, dargestellt durch die folgende chemische Formel 3, wobei die Wiederholungseinheit, die durch die folgende chemische Formel 1 dargestellt ist, in einer Menge von 1 bis 30 mol%, bezogen auf sämtliche Wiederholungseinheiten, die durch die folgende chemischen Formeln 1 bis 3 dargestellt sind, umfasst ist:

[Chemische Formel 1]

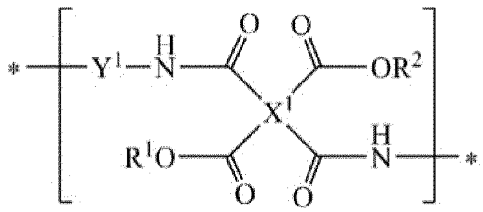

[Chemische Formel 2]

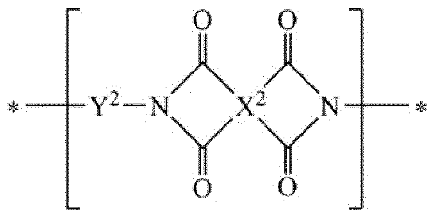

[Chemische Formel 3]

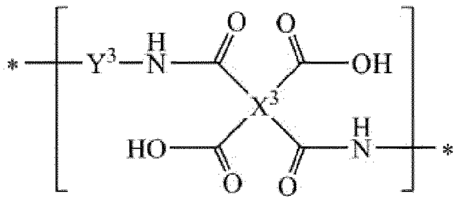

wobei $X^1$ bis $X^3$ jeweils unabhängig eine tetravalente organische Gruppe, abgeleitet von Kohlenwasserstoff mit 4 bis 20 Kohlenstoffatomen, oder eine tetravalente organische Gruppe sind, wobei einer oder mehrere Wasserstoffe durch Halogen substituiert sind oder ein oder mehrere $-CH_2-$ durch -O-, -CO-, -S- substituiert sind, um eine direkte Verknüpfung von Sauerstoff oder Schwefelatomen zu verhindern,

$R^1$ und $R^2$ jeweils unabhängig Wasserstoff oder eine Alkylgruppe mit 1 bis 10 Kohlenstoffatomen sind, vorausgesetzt, dass nicht alle $R^1$ und $R^2$ Wasserstoff sind,

$Y^1$ bis $Y^3$ jeweils unabhängig eine divalente organische Gruppe, dargestellt durch die folgende chemische Formel 4, sind:

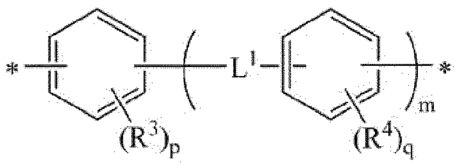

wobei $R^3$ und $R^4$ unabhängig Halogen, eine Cyanogruppe, eine Alkylgruppe mit 1 bis 10 Kohlenstoffatomen, eine Alkenylgruppe mit 2 bis 10 Kohlenstoffatomen, eine Alkoxygruppe mit 1 bis 10 Kohlenstoffatomen, eine Fluoralkylgruppe mit 1 bis 10 Kohlenstoffatomen oder eine Fluoralkoxygruppe mit 1 bis 10 Kohlenstoffatomen sind,
p und q jeweils unabhängig eine ganze Zahl von 0 bis 4 sind,
$L^1$ eine Einfachbindung, -O-, -CO-, -S-, $-SO_2-$, $-C(CH_3)_2-$, $-C(CF_3)_2-$, -CONH-,-COO-, $-(CH_2)_z-$, $-O(CH_2)_zO-$, $-O(CH_2)_z-$, $-OCH_2-C(CH_3)_2-CH_2O-$ or $-COO-(CH_2)_z-OCO-$ ist,
z eine ganze Zahl von 1 bis 10 ist, und
m eine ganze Zahl von 0 bis 3 ist.

2. Polymer für das Mittel zum Anordnen eines Flüssigkristalls nach Anspruch 1, wobei $X^1$ bis $X^3$ jeweils unabhängig tetravalente organische Gruppen, wie in der folgenden chemischen Formel 5 dargestellt, sind:

[Chemische Formel 5]

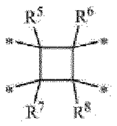, 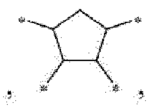, 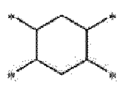, 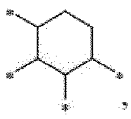, 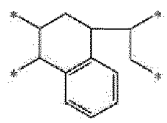, 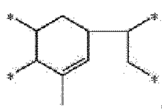, 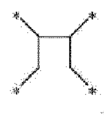,

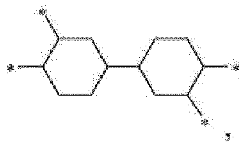, 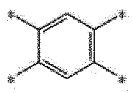, 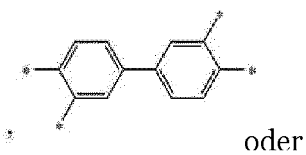 oder 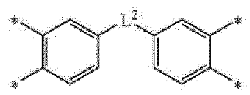

wobei $R^5$ bis $R^8$ jeweils unabhängig Wasserstoff oder eine Alkylgruppe mit 1 bis 6 Kohlenstoffatomen sind,
$L^2$ eine beliebige, ausgewählt aus der Gruppe, bestehend aus einer Einfachbindung, -O-, -CO-, -S-, -SO-, $-SO_2-$, $-CR^9R^{10}-$, -CONH-, Phenylen oder Kombinationen davon, ist, und
$R^9$ und $R^{10}$ jeweils unabhängig Wasserstoff, eine Alkylgruppe oder eine Fluoralkylgruppe mit 1 bis 10 Kohlenstoffatomen sind.

3. Polymer für das Mittel zum Anordnen eines Flüssigkristalls nach Anspruch 1, wobei zumindest eines aus $X^1$ bis $X^3$ eine tetravalente organische Gruppe ist, dargestellt durch die folgende chemische Formel 5-1:

[Chemische Formel 5-1]

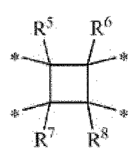

wobei $R^5$ bis $R^8$ jeweils unabhängig Wasserstoff oder eine Alkylgruppe mit 1 bis 6 Kohlenstoffatomen sind.

**4.** Polymer für das Mittel zum Anordnen eines Flüssigkristalls nach Anspruch 1, umfassend die Wiederholungseinheit, die durch die chemische Formel 1 dargestellt ist, in einer Menge von 5 bis 30 mol%, bezogen auf die gesamten Wiederholungseinheiten, die durch die chemischen Formeln 1 bis 3 dargestellt sind.

**5.** Polymer für das Mittel zum Anordnen eines Flüssigkristalls nach Anspruch 1, umfassend die Wiederholungseinheit, dargestellt durch die chemische Formel 2, in einer Menge von 10 bis 70 mol%, bezogen auf die gesamten Wiederholungseinheiten, die durch die chemischen Formeln 1 bis 3 dargestellt sind.

**6.** Polymer für das Mittel zum Anordnen eines Flüssigkristalls nach Anspruch 1, umfassend die Wiederholungseinheit, dargestellt durch chemische Formel 3, in einer Menge von 1 bis 60 mol%, bezogen auf die gesamten Wiederholungseinheiten, die durch die chemischen Formeln 1 bis 3 dargestellt sind.

**7.** Herstellungsverfahren des Polymers nach Anspruch 1, umfassend die Schritte:

Herstellen eines Esters der folgenden chemischen Formel 7 durch Veresterungsreaktion einer Tetracarboxylsäure der folgenden chemischen Formel 6 oder eines Anhydrids davon mit Alkohol;
Herstellen von Amidsäureester der folgenden chemischen Formel 9 durch Reagieren des Esters der chemischen Formel 7 und Amin der folgenden chemischen Formel 8;
Herstellen eines Diamins der folgenden chemischen Formel 10 durch Reduzieren des Amidsäureesters der chemischen Formel 9;
Herstellen eines Polymers, bestehend aus Amidsäure und Amidsäureester, durch Reagieren des Diamins der chemischen Formel 10 mit Tetracarboxylsäure oder einem Anhydrid davon; und
Durchführen einer Imidisierung des Polymers, bestehend aus Amidsäure und Amidsäureester:

[Chemische Formel 6]

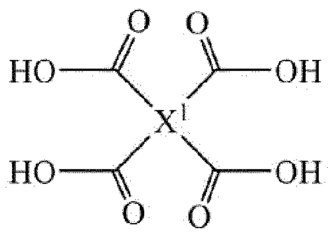

oder

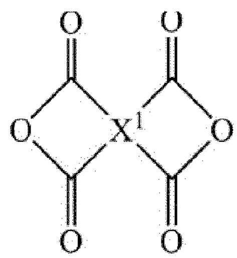

[Chemische Formel 7]

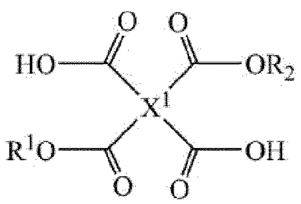

[Chemische Formel 8]

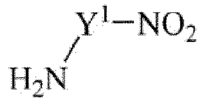

[Chemische Formel 9]

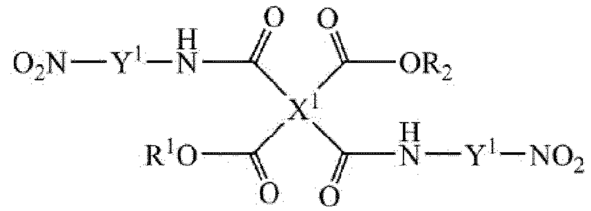

[Chemische Formel 10]

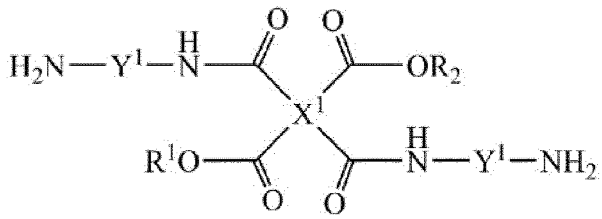

wobei $X^1$ eine tetravalente organische Gruppe ist, abgeleitet von Kohlenwasserstoff mit 4 bis 20 Kohlenstoffatomen, oder eine tetravalente organische Gruppe, wobei ein oder mehrere Wasserstoffe durch Halogen substituiert sind und ein oder mehrere $-CH_2-$ durch -O-, -CO-, -S-, -SO-, $-SO_2-$ oder -CONH- substituiert sind, um eine direkte Verbindung von Sauerstoff und Schwefelatomen zu verhindern,

$R^1$ und $R^2$ jeweils unabhängig Wasserstoff oder eine Alkylgruppe mit 1 bis 10 Kohlenstoffatomen sind, vorausgesetzt, dass nicht alle $R^1$ und $R^2$ Wasserstoff sind,

$Y^1$ jeweils unabhängig eine divalente organische Gruppe ist, dargestellt durch die folgende chemische Formel 4,

[Chemische Formel 4]

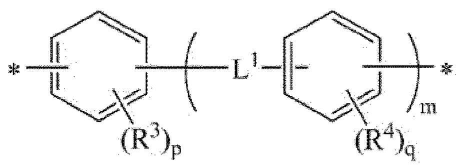

wobei $R^3$ und $R^4$ jeweils unabhängig Halogen, eine Cyanogruppe, eine Alkylgruppe mit 1 bis 10 Kohlenstoffatomen, eine Alkenylgruppe mit 2 bis 10 Kohlenstoffatomen, eine Alkoxygruppe mit 1 bis 10 Kohlenstoffatomen, eine Fluoralkylgruppe mit 1 bis 10 Kohlenstoffatomen oder eine Fluoralkoxygruppe mit 1 bis 10 Kohlenstoffatomen sind,

p und q jeweils unabhängig eine ganze Zahl von 0 bis 4 sind,

$L^1$ eine Einfachbindung, -O-, -CO-, -S-, $-SO_2-$, $-C(CH_3)_2-$, $-C(CF_3)_2-$, -CONH-,-COO-, $-(CH_2)_{z-}$, $-O(CH_2)_zO-$, $-O(CH_2)_z-$, $-OCH_2-C(CH_3)_2-CH_2O-$ or $-COO-(CH_2)_z-OCO-$ ist,

z eine ganze Zahl von 1 bis 10 ist, und
m eine ganze Zahl von 0 bis 3 ist.

8. Mittel zum Anordnen eines Flüssigkristalls, umfassend das Polymer nach einem der Ansprüche 1 bis 6.

9. Flüssigkristallanordnungsfilm, umfassend das Mittel zum Anordnen eines Flüssigkristalls nach Anspruch 8.

10. Flüssigkristallanzeigevorrichtung, umfassend den Flüssigkristallanordnungsfilm nach Anspruch 9.

## Revendications

1. Polymère pour un agent d'alignement de cristaux liquides, comprenant une unité de répétition représentée par la Formule chimique 1 ci-après, une unité de répétition représentée par la Formule chimique 2 ci-après et une unité de répétition représentée par la Formule chimique 3 ci-après, dans lequel l'unité de répétition représentée par la Formule chimique 1 ci-après est comprise dans une quantité comprise entre 1 et 30 mol% pour les unités de répétition représentées par les Formules chimiques 1 à 3:

[Formule chimique 1]

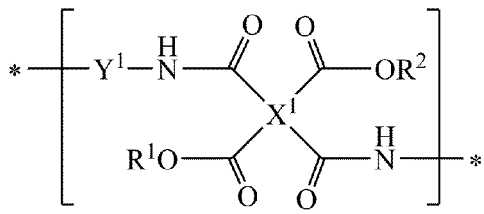

[Formule chimique 2]

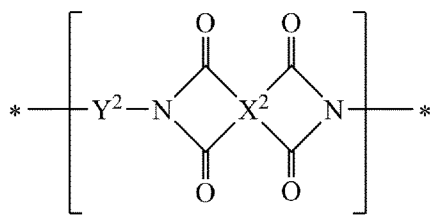

[Formule chimique 3]

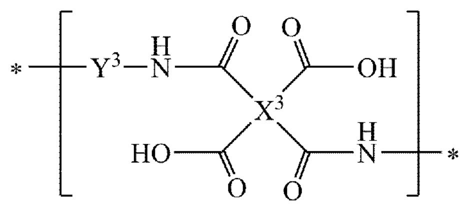

dans lequel $X^1$ à $X^3$ sont chacun indépendamment un groupe organique tétravalent dérivé d'un hydrocarbure ayant 4 à 20 atomes de carbone ou un groupe organique tétravalent, dans lequel un ou plusieurs un hydrogènes sont substitués par un halogène ou un ou plusieurs - $CH_2$- sont substitués par -O-, -CO-, -S-, -SO-, -$SO_2$- ou -CONH- afin d'empêcher un lien direct des atomes d'oxygène ou de soufre,
$R^1$ et $R^2$ sont chacun indépendamment un hydrogène ou un groupe an alkyle ayant 1 à 10 atomes de carbone, à condition que $R^1$ et $R^2$ ne sont pas tous un hydrogène,
$Y^1$ à $Y^3$ sont chacun indépendamment un groupe organique divalent représenté par la Formule chimique 4 ci-après,

[Formule chimique 4]

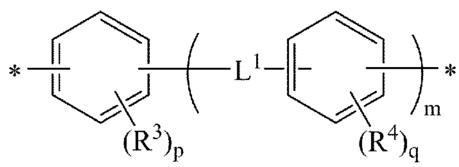

dans lequel $R^3$ et $R^4$ sont chacun indépendamment un halogène, un groupe cyano, un groupe alkyle ayant 1 à 10 atomes de carbone, un groupe alkényle ayant 2 à 10 atomes de carbone, un groupe alkoxy ayant 1 à 10 atomes de carbone, un groupe fluoralkyle ayant 1 à 10 atomes de carbone ou un groupe fluoroalkoxy ayant 1 à 10 atomes de carbone,

p et q sont chacun indépendamment un nombre entier de 0 à 4,

$L^1$ est une liaison simple, -O-, -CO-, -S-, $-SO_2-$, $-C(CH_3)_2-$, $-C(CF_3)_2-$, -CONH-, -COO-, $-(CH_2)_{z-}$, $-O(CH_2)_zO-$, $-O(CH_2)_z-$, $-OCH_2-C(CH_3)_2-CH_2O-$ ou $-COO-(CH_2)_z-OCO-$,

z est un nombre entier de 1 à 10, et

m est un nombre entier de 0 à 3.

**2.** Polymère pour l'agent d'alignement de cristaux liquides selon la revendication 1, dans lequel $X^1$ à $X^3$ sont chacun indépendamment groupes organiques tétravalents décrit dans la Formule chimique 5 ci-après:

[Formule chimique 5]

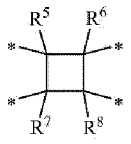, 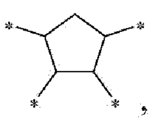, 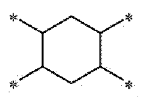, 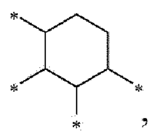, 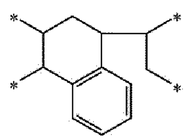, 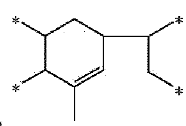, 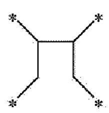,

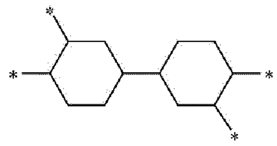, 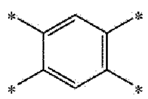, 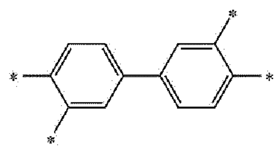 or 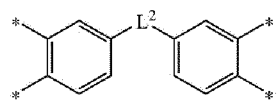

dans lequel $R^5$ à $R^8$ sont chacun indépendamment un hydrogène ou un groupe an alkyle ayant 1 à 6 atomes de carbone,

$L^2$ est un élément quelconque sélectionné dans le groupe constitué d'une liaison simple, -O-, -CO-, -S-, -SO-, $-SO_2-$, $-CR^9R^{10}-$, -CONH-, phénylène, et des combinaisons de ces derniers, et

$R^9$ et $R^{10}$ sont chacun indépendamment un hydrogène, un groupe alkyle ou un groupe fluoralkyle ayant 1 à 10 atomes de carbone.

**3.** Polymère pour l'agent d'alignement de cristaux liquides selon la revendication 1, dans lequel au moins un parmi $X^1$ à $X^3$ est un groupe organique tétravalent représenté par la Formule chimique ci-après 5-1:

[Formule chimique 5-1]

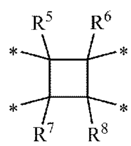

dans lequel $R^5$ à $R^8$ sont chacun indépendamment un hydrogène ou un groupe an alkyle ayant 1 à 6 atomes de carbone.

**4.** Polymère pour l'agent d'alignement de cristaux liquides selon la revendication 1, comprenant l'unité de répétition représentée par Formule chimique 1 dans une quantité comprise entre 5 et 30 mol% pour les unités de répétition représentées par les Formules chimiques 1 à 3.

**5.** Polymère pour l'agent d'alignement de cristaux liquides selon la revendication 1, comprenant l'unité de répétition représentée par la Formule chimique 2 dans une quantité comprise entre 10 et 70 mol% pour les unités de répétition représentées par les Formules chimiques 1 à 3.

**6.** Polymère pour l'agent d'alignement de cristaux liquides selon la revendication 1, comprenant l'unité de répétition représentée par Formule chimique 3 dans une quantité comprise entre 1 et 60 mol% pour les unités de répétition représentées par les Formules chimiques 1 à 3.

**7.** Procédé de préparation du polymère selon la revendication 1, comprenant les étapes consistant à:

préparer un ester de la Formule chimique 7 par une réaction d'estérification de l'acide tétracarboxylique de la Formule chimique 6 ci-après ou d'un anhydride de celui-ci avec de l'alcool;
préparer un ester d'acide amique de la Formule chimique 9 ci-après en faisant réagir l'ester de la Formule chimique 7 et une amine de la Formule chimique 8 ci-après;
préparer une diamine de la Formule chimique 10 ci-après en réduisant l'ester d'acide amique de la Formule chimique 9;
préparer un polymère composé de acide amique et de l'ester d'acide amique en faisant réagir la diamine de la Formule chimique 10 avec l'acide tétracarboxylique ou un anhydride de celui-ci; et
effectuer une imidisation du polymère composé d'acide amique et d'ester d'acide amique:

[Formule chimique 6]

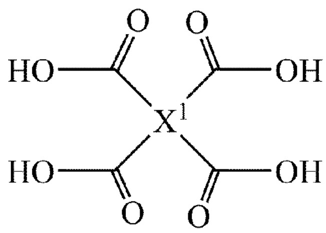

or

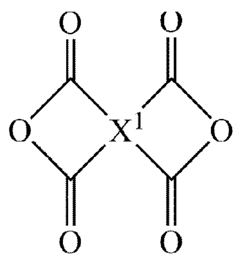

[Formule chimique 7]

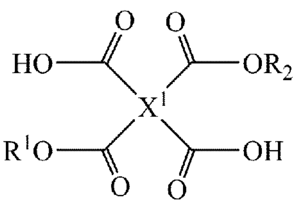

[Formule chimique 8]

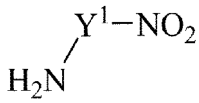

[Formule chimique 9]

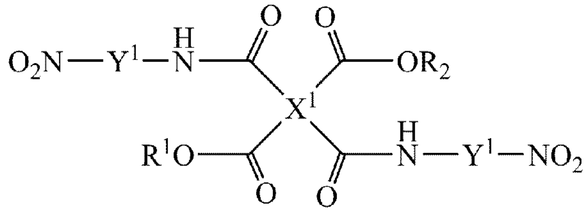

[Formule chimique 10]

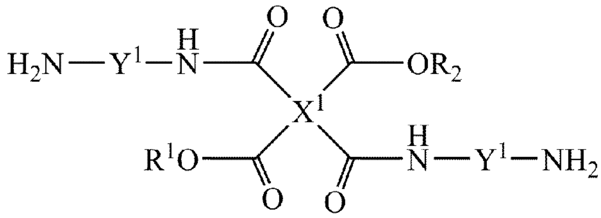

dans lequel $X^1$ est un groupe organique tétravalent dérivé d'un hydrocarbure ayant 4 à 20 atomes de carbone ou d'un groupe organique tétravalent, dans lequel un ou plusieurs un hydrogènes sont substitués par un halogène ou un ou plusieurs $-CH_2-$ sont substitués par -O-,-CO-, -S-, -SO-, $-SO_2-$ ou -CONH- afin d'empêcher un lien direct des atomes d'oxygène ou de soufre,

$R^1$ et $R^2$ sont chacun indépendamment un hydrogène ou un groupe an alkyle ayant 1 à 10 atomes de carbone, à condition que $R^1$ et $R^2$ ne sont pas tous un hydrogène,

$Y^1$ est chacun indépendamment un groupe organique divalent représenté par la Formule chimique 4,

[Formule chimique 4]

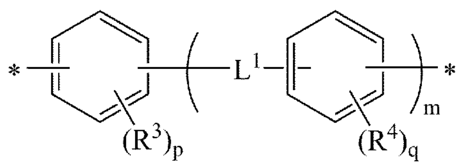

dans lequel $R^3$ et $R^4$ sont chacun indépendamment un halogène, un groupe cyano, un groupe alkyle 1 à 10 ayant atomes de carbone, un groupe alkényle ayant 2 à 10 atomes de carbone, un groupe alkoxy ayant 1 à 10 atomes de carbone, un groupe fluoralkyle ayant 1 à 10 atomes de carbone ou un groupe fluoroalkoxy ayant 1 à 10 atomes de carbone,

p et q sont chacun indépendamment un nombre entier de 0 à 4,

$L^1$ est une liaison simple, -O-, -CO-, -S-, $-SO_2-$, $-C(CH_3)_2-$, $-C(CF_3)_2-$, -CONH-, -COO-, $-(CH_2)_z-$, $-O(CH_2)_zO-$, $-O(CH_2)_z-$, $-OCH_2-C(CH_3)_2-CH_2O-$ ou $-COO-(CH_2)_z-OCO-$, z est un nombre entier de 1 à 10, et

m est un nombre entier de 0 à 3.

**8.** Agent d'alignement de cristaux liquides comprenant le polymère selon l'une quelconque des revendications 1 à 6.

**9.** Film d'alignement de cristaux liquides comprenant l'agent d'alignement de cristaux liquides selon la revendication 8.

**10.** Dispositif d'affichage à cristaux liquides comprenant le film d'alignement de cristaux liquides selon la revendication 9.